# EUROPÄISCHE PATENTSCHRIFT

(11) **EP 4 621 168 B1**
(45) Veröffentlichungstag und Bekanntmachung des Hinweises auf die Patenterteilung: **29.04.2026**
(21) Anmeldenummer: 25154825.1
(22) Anmeldetag: 29.01.2025
(51) Int. Cl.: E04H 17/02, A01K 3/00, E04H 17/06, E04H 17/08

(54) **WILDSCHUTZ- ODER WEIDEZAUNAUFBAUSYSTEM SOWIE AUFBAUVERFAHREN DAMIT**
WILDLIFE OR PASTURE FENCE CONSTRUCTION SYSTEM AND CONSTRUCTION METHOD USING SAME
SYSTÈME D'ASSEMBLAGE DE CLÔTURE DE PROTECTION OU DE CLÔTURE AINSI QUE PROCÉDÉ D'ASSEMBLAGE L'UTILISANT

(30) Priorität: 08.02.2024 DE 202024100631 U; 27.03.2024 DE 202024101548 U
(43) Veröffentlichungstag der Anmeldung: 24.09.2025
(73) Patentinhaber: Holm, Martin, 27726 Worpswede (DE)
(72) Erfinder: Holm, Martin, 27726 Worpswede (DE)
(74) Vertreter: Weidner Stern Jeschke

(56) Entgegenhaltungen:
- CA-A1- 2 401 007
- US-A1- 2013 256 619

## Beschreibung

Die Erfindung betrifft ein Wildschutz- oder Weidezaunaufbausystem bestehend aus standardisierten Profilpfählen, die mit Verbindungsmitteln miteinander verbindbar sind. Ferner betrifft die Erfindung ein Wildschutz- oder Weidezaunaufbauverfahren damit.

Derartige Wildschutz- oder Weidezaunaufbausysteme sind im Stand der Technik aufgebaut aus sogenannten Z-Profilpfosten in verschiedenen Ausgestaltungen bekannt. Dabei werden die Z-Pfosten meist aus verzinktem Bandstahl oder teils auch aus Kunststoff gefertigt. An den Z-Profilpfosten sind Haken ausgestanzt oder angeformt, die zur Aufnahme eines den Zaun bildenden Knotengeflechts oder Drahtes dienen. Die Z-Profilpfosten werden entweder direkt in den Boden gedrückt oder mittels gesonderter Fundamentspitzen etc. versehen und darauf aufgesellt. Um eine ausreichende Festigkeit, insbesondere bei Richtungsänderungen in der Zaunlinie und natürlich an Einfriedungsecken (rechtwinkligen Richtungsänderungen der Zaunlinie) für einen aufrechten Stand der Z-Profilpfosten zu sichern, ist es ferner bekannt, mittels gesonderter Verbindungsmittel Abspannungen bzw. Abstützungen den möglichst lotrecht angeordneten Z-Profilpfosten am Richtungsänderungspunkt des Zaunes zu versteifen. Dabei wird ein gleichartiger Z-Profilpfosten diagonal vom Boden bis zu etwa Zweidrittel bis Dreiviertel der Höhe des lotrechten Z-Profilpfostens eingespannt und fest mit dem Verbindungsmittel miteinander verbunden. Dafür sind gesonderte Schraubschellen für den lotrechten Z-Profilpfosten sowie entsprechende Endkappen auf dem oberen freien Ende des diagonal einzusetzenden Versteifungsprofils vorgesehen, die miteinander aufwendig zu verschrauben sind. Diese Arbeiten sind insbesondere bei schlechter und kalter Witterung und mit Arbeitshandschuhen auf dem Feld oder im Wald äußerst zeitaufwändig und wenig attraktiv. US 2013/256619 A1 und CA 2301007A1 zeigen Wildschutz- und Weidezaunaufbausysteme gemäß dem Stand der Technik.

Aufgabe der Erfindung ist es, die bekannten Wildschutz- oder Weidezaunaufbausysteme derart umzugestalten bzw. weiter zu bilden, dass die erforderlichen Verbindungsmittel ohne kleinteilige Schrauben und Muttern lediglich durch Steckverbindungen zu erstellen sind, um die Arbeiten auf dem Feld oder im Wald deutlich zu vereinfachen und dem Verlust von Kleinteilen vorzubeugen.

Gelöst wird diese Aufgabe mit einem Wildschutz- oder Weidezaunaufbausystem gemäß Anspruch 1 und einem Wildschutz- oder Weidezaunaufbauverfahren nach Anspruch 13.

Dadurch, dass die standardisierten Profilpfähle ein C-Profil haben, wobei in einem durchgehenden Rückenschenkel in regelmäßigen Abständen Aufnahmelöcher sowie im Übergang zwischen am Rückenschenkel beidseitig vorstehenden Seitenschenkeln und jeweiligen aufeinanderzugefalzten Öffnungsabschnitten je ein Aufnahmefalz angeordnet sind, und die Verbindungsmittel gebildet sind aus einem Flachverbinder in Form eines kurzen, ungefalzten, flachen, im Wesentlichen rechteckigen Elementes, wobei die Längsseiten leicht konisch zu einer ersten kurzen Seite des rechteckigen Elementes zulaufen und dabei in zwei diagonal einander gegenüberliegende Aufnahmefalze eines weiteren Profilpfahles einschieb- und festsetzbar sind sowie an einer der ersten kurzen Seite gegenüberliegenden, zweiten kurzen Seite eine Rastnase angeordnet ist, die in eins der Aufnahmelöcher im Rückenschenkel des ersten Profilpfahles eingreifbar ausgebildet ist, kann an einem zweiten Profilpfahl der Flachverbinder an einem seiner freien Enden kraftschlüssig eingeschoben werden und somit dieser zweite Profilpfahl als Diagonalstrebe am lotrechten Profilpfahl werkzeuglos eingesteckt und verbunden werden.

Entsprechend zeichnet sich das Wildschutz- oder Weidezaunaufbauverfahren für dieses Wildschutz- oder Weidezaunaufbausystem durch die Schritte aus, nämlich Einschieben des Flachverbinders in zwei diagonal gegenüberliegende Aufnahmefalze des zweiten Profilpfahles und Eingreifen einer an einer zweiten kurzen Seite vorstehenden Rastnase in ein Aufnahmeloch im ersten Profilpfahl.

Damit ist ein Aufbau eines Zaunsystems zum Einhängen eines Knotengeflechts bereitgestellt, der keine Werkzeuge, Schrauben und/oder Muttern benötigt. Der Aufbau ist daher im Gelände auch unter widrigen Umgebungsbedingungen mit geringem Aufwand durchzuführen. Insbesondere kann das Aufbaupersonal problemlos mit Handschuhen arbeiten, da die Verbindungsmittel, nämlich hier allein der Flachverbinder deutlich großteiliger als etwaige Schrauben, Muttern oder dergleichen und deshalb auch mit Handschuhen handhabbar und montierbar ist. Sollte ein Flachverbinder doch mal bei der Montage abfallen, ist dieser aufgrund seiner Größe schneller und leichter auf dem Wald-/Weideboden wieder auffindbar. Dabei kann die Rastnase alternativ beidseitig, also entweder zwischen den Seitenschenkeln des C-Profils des Profilpfahles, quasi von innen, oder von außen in das gewünschte Aufnahmeloch am Rückenschenkel des Profilpfahles eingeführt werden.

Dadurch, dass die Rastnase an der zweiten kurzen Seite des Flachverbinders in seiner Flächenansicht eine Dreiviertelkreisform hat, wobei der Durchmesser dieser Dreiviertelkreisform dem Innendurchmesser des Aufnahmeloches des Rückenschenkels des ersten Profilpfahles entspricht oder um bis zu 10% kleiner ist, erfolgt eine Verrastung beim Einstecken der Rastnase vom Flachverbinder in das Aufnahmeloch des ersten Profilpfahles, womit ein unbeabsichtigtes Lösen auch bei Zugbeanspruchung dieser Verbindung vermieden wird.

Dadurch, dass an wenigstens einem Seitenschenkel des Profilpfahles Aufnahmelanglöcher eingebracht sind, deren Langlochbreite bis zu 20% kleiner als der Durchmesser der Dreiviertelkreisform der Rastnase ist, kann die Rastnase des Flachverbinders auch durch das Langloch geführt, leicht um ca. 45° verdreht und damit verrastet werden, womit eine weitere werkzeuglose Möglichkeit zur Montage einer alternativen oder ergänzenden Diagonalstrebe gegeben ist. Entsprechend wird verfahrensgemäß die Rastnase des Flachverbinders in ein an wenigstens einem Seitenschenkel des ersten Profilpfahles vorgesehenes Aufnahmelangloch eingesteckt und um ungefähr 45° um die Längsachse des zweiten Profilpfahles verdreht und damit verrastet. Somit können auch bei beispielsweise 90° Ecken im Zaunaufbau dieser Eckphahl zu beiden Belastungsseiten diagonal mit jeweils zweiten Profilpfählen abgestützt und versteift werden.

Wenn beim Flachverbinder die erste Längsseite zur zweiten Längsseite mit einem Winkel von 0,5° bis 5° leicht konisch zur ersten kurzen Seite des rechteckigen Elementes zulaufen, ergibt sich eine kraftschlüssige Klemmung des Flachverbinders beim Einschieben in ein freies Ende eines C-förmigen Profilpfahls in derart, dass die beiden Längsseiten innerhalb der beiden Aufnahmefalze über die gesamte Länge aufliegen und dass C-Profil an diesem Ende ein wenig aufgedehnt wird. Somit verankert sich der diagonal im C-Profil angeordnete Flachverbinder in dem Profilpfahl durch Reibschluß.

Dadurch, dass am Ende der ersten und zweiten Längsseiten nahe der zweiten kurzen Seite Einsteckanschlagnasen ausgebildet sind, wird ein definierter Anschlag beim Einstecken des Flachverbinders in den zweiten Profilpfahl bereitgestellt und somit ein zu tiefes Einsinken des Flachverbinders in dem C-Profil verhindert.

Dadurch, dass die Rastnase an der zweiten kurzen Seite des Flachverbinders an einer schmal-rechteckigen Verlängerung ausgebildet ist, wobei die Breite der schmal-rechteckigen Verlängerung der lichten Weite zwischen den aufeinanderzugefalzten Öffnungsabschnitten des Profilpfahles entspricht oder um bis zu 10% kleiner ist, kann diese schmal-rechteckige Verlängerung des Flachverbinders zwischen die Seitenschenkel des als C-Profil ausgebildeten Profilpfahles bis zum Rückenschenkel hindurchgreifen. Was verfahrensgemäß dadurch gekennzeichnet ist, dass die Rastnase des Flachverbinders mit einer schmal-rechteckigen Verlängerung, dessen Breite kleiner-gleich der Öffnung des C-Profils ist, in das C-Profil zwischen deren Seitenschenkel des ersten Profilpfahles eingeführt und in ein Aufnahmeloch eingegriffen wird. Dabei stützt sich diese schmal-rechteckige Verlängerung an den Öffnungsabschnitten der Seitenschenkel stabilisierend ab und erhöht somit die Steifigkeit und Belastbarkeit des Zaunaufbaus.

Um dies sicher auch bei diagonal ansetzendem zweitem Profilpfahl erreichen zu können, hat die schmal-rechteckige Verlängerung eine Länge, die der 1,2 bis 2,5-fachen Tiefe des C-Profils des Profilpfahles entspricht. Bei einem steiler (größer 45° zur Horzontalen) an den senkrecht angeordneten ersten Profilpfahl angeordneten zweiten Profilpfahl sollte die schmal-rechteckige Verlängerung eine Länge größer das 1,5-fache der Tiefe des C-Profils des Profilpfahles aufweisen.

Dadurch, dass die schmal-rechteckige Verlängerung in der Flächenansicht außermittig, um 5 % bis 20 % entlang der Breite der zweiten kurzen Seite verschoben, am flachen, im Wesentlichen rechteckigen Element angeformt ist, steht - bei seitenrichtiger Montage - der zweite, um seine Profilachse um ca. 45° verdrehte Profilpfahl mit seiner Außenkante in Flucht mit einem der Seitenschenkel des ersten Profilpfahles, um an dieser Seite einen Zaunbehang flächig anlegen zu können.

Wenn an der zweiten kurzen Seite oder an der schmal-rechteckigen Verlängerung neben der Rastnase Anlageschrägen ausgebildet sind, kann der Flachverbinder im von außen in einem Aufnahmeloch oder Aufnahmelangloch eingesteckten Zustand über einen Toleranzwinkelbereich von beispielsweise +/- 30° relativ zu einer senkrecht zur vom Rückenschenkel oder vom betreffenden Seitenschenkel aufgespannten Vertikalebene als Verbindungsmittel für eine Diagonalstrebe montiert werden.

Wenn die Profilpfähle und die Flachverbinder aus beschichtetem Stahlblech, beispielsweise feuerverzinktem Bandstahl oder aus mit Magnesium-haltiger Beschichtung versehenem Blech, gefertigt, insbesondere ausgelasert sind, sind die Bauteile des Zaunaufbausystems stabil und langlebig und ggf. auch wiederverwertbar, falls der Zaun abgebaut, versetzt oder umgesetzt werden muß. Besonders bevorzugt ist eine Zink-Aluminium-Magnesium-Beschichtung, auch unter dem Markennamen "Magnelis" bekannt.

Wenn die standardisierten Profilpfähle an deren Seitenschenkel Haken in standardisierten Abständen zum zu verwendenden Knotengeflecht aufweisen, so dass diese mit einem Knotengeflecht behangbar sind, kann das entsprechend passende Knotengeflecht in die Haken an den Profilpfählen eingehakt werden. Zur Fixierung können die freien Enden der Haken mit einem Hammerschlag oder mit einem Biegewerkzeug geschlossen werden, um ein Herausrutschen des Knotengeflechts zu vermeiden. Bevorzugt sind die Haken im Seitenschenkel des Profilpfahles aus dem verzinkten Bandstahl ausgestanzt.

Nachfolgend wird der Erfindungsgegenstand anhand der beiliegenden Figuren detailliert dargestellt.

Darin zeigt:
- Fig. 1: in räumlicher Ansicht einen Ausschnitt von einem Zaunaufbausystem mit zwei mit einem Verbindungsmittel verbundenen Profilpfählen,
- Fig. 2 a: einen Flachverbinder in räumlicher Ansicht und

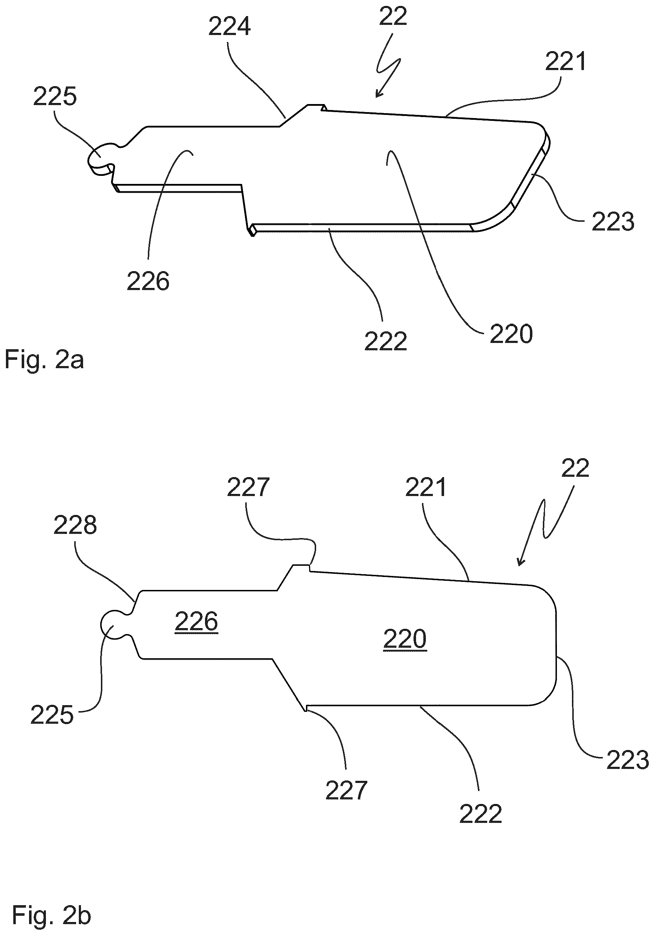

- Fig. 2 b: der Flachverbinder aus Fig. 2 a in Aufsicht.

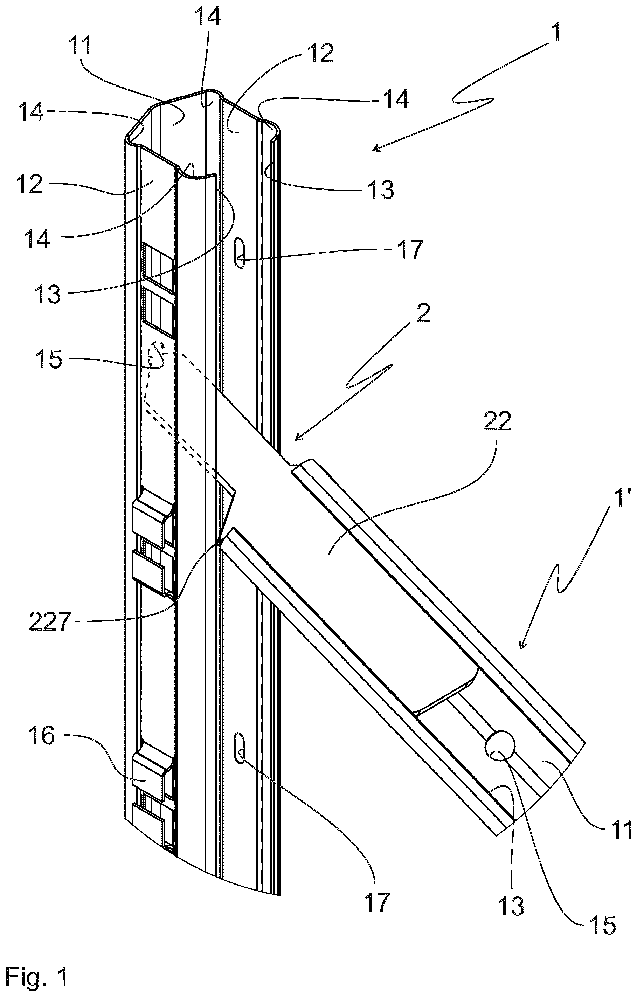

Die Fig. 1 zeigt in räumlicher Ansicht einen Ausschnitt von einem erfindungsgemäßen Zaunaufbausystem, bei dem zwei standardisierte Profilpfähle 1, 1' in C-Profilform mit einem Verbindungsmittel 2 miteinander verbunden sind. Beide Profilpfähle 1, 1' sind identisch. Der senkrecht angeordnete Profilpfahl 1 ist lotrecht im Erdboden eingetrieben bzw. eingegraben oder mit einem als Fundament dienenden Erdspieß verankert. Der zweite Profilpfahl 1' dient als Diagonalstrebe und ist an seinem oberen, freien Ende mit dem lotrechten Profilpfahl 1 beispielsweise etwa auf der Hälfte bis Dreiviertel seiner Höhe mit dem Verbindungsmittel 2 verbunden.

Der aus Profilstahl ausgebildete Profilpfahl 1, 1' weist C-förmigen Querschnitt auf, wobei an einem Rückenschenkel 11 beidseitig Seitenschenkel 12 und jeweils aufeinander zugefalzte Öffnungsabschnitte 13 vorgesehen sind. Zwischen dem Rückenschenkel 11 und den Seitenschenkeln 12 einerseits sowie den Seitenschenkeln 12 und den Öffnungsabschnitten 13 andererseits sind je ein Aufnahmefalz 14 ausgebildet. Ferner sind aussenseitig an den Seitenschenkeln 12 in standardisierten Abständen, beispielsweise alle 10 cm, Knotengeflechthaken 16 eingebracht (beispielsweise ausgestanzt und vorgebogen), um ein hier nicht dargestelltes Knotengeflecht als Zaunbehang darin einhaken zu können. Des weiteren sind im Rückenschenkel 11 des Profilpfahls 1, 1' in standardisierten Abständen, beispielsweise alle 20 cm, Aufnahmelöcher 15 in zum Verbindungsmittel 2 passender Dimensionierung eingebracht, wie dies am Profilpfahl 1 gestrichelt, da verdeckt, sowie frei sichtbar am Profilpfahl 1' in Fig. 1 dargestellt ist.

Das Verbindungsmittel 2 besteht aus einem Bauteil, nämlich einem Flachverbinder 22, der ebenfalls bevorzugt aus verzinktem Stahlblech ausgeschnitten, ausgestanzt oder ausgelasert und erfindungsgemäß geformt ist.

Der Flachverbinder 22 besteht aus einem flachen, rechteckigen Element 220, dessen beide Längsseiten 221, 222 leicht konisch zueinander zu einer ersten kurzen Seite 223 zulaufen. Die Winkelabweichung zur Parallelität der ersten zur zweiten Längsseite 221, 222 beträgt wenige Grad, zum Beispiel 0,5° bis 5°. An der zur ersten kurzen Seite 223 gegenüberliegenden zweiten kurzen Seite 224 ist an einer schmal-rechteckigen Verlängerung 226 des Flachverbinders 22 eine Rastnase 225 angeformt, die in ihrer Flächenansicht eine Dreiviertelkreisform aufweist, wobei der Durchmesser dieser Dreiviertelkreisform dem Innendurchmesser des Aufnahmeloches 15 im Rückenschenkel 11 des Profilpfahles 1 entspricht oder um bis zu 10% kleiner ist. Damit wird wiederum gewährleistet, dass die Rastnase 225 des Flachverbinders 22 in das Aufnahmeloch 15 im Rückenschenkel 11 des Profilpfahles 1 einsteckbar ist, jedoch auch, insbesondere bei schräger Anstellung zur Bildung der Diagonalstrebe das Aufnahmeloch 15 hintergreifen kann.

Dabei entspricht die Breite der schmal-rechteckigen Verlängerung 226 der lichten Weite zwischen den aufeinanderzugefalzten Öffnungsabschnitten 13 des Profilpfahles 1 oder ist um bis zu 10% kleiner, sodass sich die schmal-rechteckige Verlängerung 226 bei ordnungsgemäßem Einbau des Flachverbinders 22 im Profilpfahl 1 innerhalb des C-Profils an den nach innen gekanteten Öffnungsabschnitten 13, 13 abstützen kann, womit eine erhöhte Knicksteifigkeit der Verbindung gewährleistet wird. Diese schmal-rechteckige Verlängerung 226 stabilisiert somit den Sitz des Flachverbinders 22 im C-Profil des Profilpfahls 1 und verhindert ein sich Lösen der Verbindung auch bei großeren Zugkräften durch den Reibschluss.

Ferner sind in dem den Knotengeflechthaken 16 gegenüberliegenden Seitenschenkel 12, bevorzugt in regelmäßigen Abständen von beispielsweise 20 cm Langlöcher 17 eingebracht (siehe Fig. 1), die eine Breite aufweisen, die geringfügig kleiner, bevorzugt bis 20% kleiner als der Durchmesser der Dreiviertelkreisform der Rastnase 225 ist. Damit kann die Rastnase 225 bei ausreichender Verdrehung des Profilpfahles 1', in dem der Flachverbinder 22 verankert ist, um beispielsweise 45°, durch das Aufnahmelangloch 17 durchgesteckt und durch Rückdrehen der Flachverbinder-Profilpfahl-Einheit verrastet werden, womit die so geschaffene Verbindung Zug- und Druckkräfte aufnehmen kann. Damit kann an einem lotrechten Profilpfahl 1 alternativ oder ergänzend eine Diagonalstrebe an dem Seitenschenkel 12 verankert werden, falls dies für den Zaunaufbau sinnvoll erscheint. Somit können mit dem erfindungsgemäßen Wildschutz- oder Weidezaunaufbausystem Diagonalabstützungen variabel und der jeweiligen Einbausituation angepasst werkzeuglos erstellt werden. Neben einer einseitigen Diagonalabstützung sind auch doppelseitige oder gar dreiseitige, die auch in breiten Winkelbereichen in Bezug auf die Zaunbehangebene aufstell- und verbindbar sind, möglich.

Um eine definierte Anlage des Flachverbinders 22 im unmittelbaren Umgebungsbereich der Rastnase 225 am Profilpfahl 1 entweder innen- oder außenseitig am Rückenschenkel 11 nahe des betreffenden Aufnahmeloches 15 oder außenseitig am Seitenschenkel 12 nahe des betreffenden Aufnahmelangloches 17 zu gewährleisten, weist die schmal-rechteckige Verlängerung 226 an der Rastnase 225 beidseitig dieser Rastnase 225 Anlageschrägen 228 auf. Somit kann der Flachverbinder 22 im von außen in einem Aufnahmeloch 225 oder Aufnahmelangloch 227 eingesteckten Zustand über einen Toleranzwinkelbereich von beispielsweise +/- 30° relativ zu einer senkrecht zur vom Rückenschenkel 11 oder vom betreffenden Seitenschenkel 12 aufgespannten Vertikalebene als Verbindungsmittel für eine Diagonalstrebe montiert werden.

Ferner ist es auch möglich eine Diagonalstrebe in Form eines C-Profilpfahls 1' zwischen zwei in geeignetem Abstand aufeinanderfolgende Profilpfähle 1 einzufügen, in dem an beiden Enden des C-Profilpfahls 1' je ein Flachverbinder 22 eingesetzt ist und die jeweiligen Rastnasen 225 einmal im oberen Drittel des ersten Profilpfahls 1 und auf der anderen Seite im Fußbereich des zweiten Profilpfahls 1 in dortige Aufnahmelöcher 15 und/oder Aufnahmelanglöcher 17 einsteck- und verrastbar sind.

Nachfolgend wird die Funktionsweise des Verbindungsmittels 2 in Verbindung mit den Profilpfählen 1, 1' beim Aufbau eines Zaunsystems beschrieben. Die standardisierten Profilpfähle 1 werden in geeignetem Abstand entlang der gewünschten Zaunlinie jeweils im wesentlichen lotrecht im Boden verankert. In regelmäßigen Abstanden von beispielsweise 5 bis 10 Profilpfählen 1 oder in jedem Fall bei Richtungsänderungen in der Zaunlinie werden gleichartige Profilpfähle 1' als Diagonalverstrebungen mit ihrem unteren Ende schräg im Erdboden und mit ihrem oberen Ende etwa auf zweidrittel bis dreiviertel Höhe des lotrecht angeordneten Profilpfahls 1 montiert, wobei an dieser Stelle das Verbindungsmittel 2 verwendet wird.

Dazu nimmt die Montageperson den als Diagonalstrebe vorgesehenen Profilpfahl 1' in Bearbeitung. An seinem oberen freien Ende wird der Flachverbinder 22 mit seiner ersten kurzen Seite 223 voran entlang zweier diagonal gegenüberliegender Aufnahmefalze 14 eingeschoben, bis Einsteckanschlagnasen 227 am oberen freien Ende des Profilpfahles 1' anliegen (siehe Fig. 1). Dabei liegen die leicht konisch angeordneten Längsseiten 221 und 222 in dem jeweils zugeordneten Aufnahmefalz 14 über ihre gesamte Länge an, wobei sich das Ende des C-Profilpfahls 1' leicht aufdehnt und somit der Flachverbinder 22 fest entlang seiner konisch angeordneten Längsseiten 221, 222 mittels der elastischen Kraft des leicht aufgebogenen C-Profils und seiner Aufnahmefalze 14, 14 kraftschlüssig gehalten wird.

Der nun im freien Ende des Profilpfahles 1' verankerte Flachverbinder 22 wird mit seiner an der schmal-rechteckigen Verlängerung 226 vorstehenden Rastnase 225 in den Profilpfahl 1 innerhalb des C-Profils eingeführt und in ein auf geeigneter Höhe liegendes Aufnahmeloch 15 im Rückenschenkel 11 des Profilpfahls 1 eingesteckt. Die Rastnase 225 ist so ausgebildet, dass sie in das Aufnahmeloch 15 verrastet, so dass eine sichere Abstützung auf Druck- und Zugkräfte gewährleistet ist.

Dabei ist die schmal-rechteckige Verlängerung 226 mit der daran angeformten Rastnase 225 in der Flächenansicht außermittig, um 5 % bis 20 % entlang der Breite der zweiten kurzen Seite 224 verschoben angeordnet, damit an der Seite, an der der Zaunbehang an die Knotengeflechthaken gehängt werden soll, eine fluchtende Ebene zwischen der Vorderkante des in Profilachse um ca. 45° verdrehten Profilpfahles 1' und dem betreffenden Seitenschenkel 12 (in Fig. 1 der vordere sichtbare Seitenschenkel 12 mit den Knotengeflechthaken 16) gewährleistet ist.

Alternativ oder ergänzend kann eine Diagonalstrebe auch von hinten (in Fig. 1 von schräg links hinten) direkt in eines der im Rückenschenkel 11 angeordneten Aufnahmelöcher 15 eingesteckt werden, womit eine flexiblere Orientierung der Diagonalstrebe (zweiter Profilpfahl 1') möglich ist, jedoch die abstützende Versteifung durch die hierbei nicht mögliche Anlage der schmal-rechteckigen Verlängerung 226 an den Öffnungsabschnitten 13 fehlt.

Für eine weitere alternative oder ergänzende Befestigungsmöglichkeit einer Diagonalstrebe am Profilpfahl 1 ist dort am den Knotengeflechthaken 16 gegenüberliegenden Seitenschenkel 12 Aufnahmelanglöcher 17 vorgesehen, in die die Rastnase des Flachverbinders leicht verdreht um beispielsweise 45° durch das Langloch geführt, wieder rückgedreht und damit verrastet werden kann.

Somit kann mit dem erfindungsgemäßen Wildschutz- oder Weidezaunaufbausystem über das beschriebene Verbindungsmittel 2 eine sichere Verbindung und Verankerung zur Abstürzung der lotrecht angeordneten Profilpfähle 1 mit diagonal angeordneten Profilpfählen 1' ohne Verwendung von Werkzeugen und insbesondere ohne Kleinteile, wie beispielsweise Schrauben und Muttern, erstellt werden. Das so ausgebildete Zaunaufbausystem zeichnet sich somit bei gleicher Stabilität mit einem wesentlich leichteren und schnelleren Aufbau aus.

### Bezugszeichenliste

- 1, 1': standardisierter Profilpfahl
- 11: Rückenschenkel
- 12: Seitenschenkel
- 13: Öffnungsabschnitt
- 14: Aufnahmefalz
- 15: Aufnahmeloch
- 16: Knotengeflechthaken
- 17: Aufnahmelangloch

- 2: Verbindungsmittel
- 22: Flachverbinder
- 220: flaches, rechteckiges Element
- 221: erste Längsseite
- 222: zweite Längsseite
- 223: erste kurze Seite
- 224: zweite kurze Seite
- 225: Rastnase
- 226: schmal-rechteckige Verlängerung
- 227: Einsteckanschlagnase
- 228: Anlageschräge

## Patentansprüche

1. Wildschutz- oder Weidezaunaufbausystem bestehend aus standardisierten Profilpfählen (1, 1'), die mit Verbindungsmitteln (2) miteinander verbindbar sind, wobei
- die standardisierten Profilpfähle (1, 1') ein C-Profil haben, welche in einem durchgehenden Rückenschenkel (11) in regelmäßigen Abständen Aufnahmelöcher (15) sowie im Übergang zwischen am Rückenschenkel (11) beidseitig vorstehenden Seitenschenkeln (12) und jeweiligen aufeinanderzugefalzten Öffnungsabschnitten (13) je einen Aufnahmefalz (14) aufweisen, **dadurch gekennzeichnet, dass**
- das Verbindungsmittel (2) gebildet ist aus einem Flachverbinder (22) in Form eines flachen, im Wesentlichen rechteckigen Elementes (220), wobei die Längsseiten (221, 221) leicht konisch zu einer ersten kurzen Seite (223) des rechteckigen Elementes zulaufen und dabei in zwei diagonal gegenüberliegende Aufnahmefalze (14, 14) eines weiteren Profilpfahles (1') einschieb- und festsetzbar sind sowie an einer der ersten kurzen Seite (223) gegenüberliegenden, zweiten kurzen Seite (224) eine vorstehende Rastnase (225) angeordnet ist, die in das Aufnahmeloch (15) des Rückenschenkels (11) des ersten Profilpfahles (1) eingreifbar ausgebildet ist.

2. Wildschutz- oder Weidezaunaufbausystem nach Anspruch 1, **dadurch gekennzeichnet, dass** die Rastnase (225) an der zweiten kurzen Seite (224) des Flachverbinders (22) in seiner Flächenansicht eine Dreiviertelkreisform hat, wobei der Durchmesser dieser Dreiviertelkreisform dem Innendurchmesser des Aufnahmeloches (15) des Rückenschenkels (11) des ersten Profilpfahles (1) entspricht oder um bis zu 10% kleiner ist.

3. Wildschutz- oder Weidezaunaufbausystem nach Anspruch 2, **dadurch gekennzeichnet, dass** an wenigstens einem Seitenschenkel (12) des Profilpfahles (1) Aufnahmelanglöcher (17) eingebracht sind, deren Langlochbreite bis zu 20% kleiner als der Durchmesser der Dreiviertelkreisform der Rastnase (225) ist.

4. Wildschutz- oder Weidezaunaufbausystem nach einem der vorangehenden Ansprüche, **dadurch gekennzeichnet, dass** beim Flachverbinder (22) die erste Längsseite (221) zur zweiten Längsseite (222) mit einem Winkel von 0,5° bis 5° leicht konisch zur ersten kurzen Seite (223) des rechteckigen Elementes zulaufen.

5. Wildschutz- oder Weidezaunaufbausystem nach einem der vorangehenden Ansprüche, **dadurch gekennzeichnet, dass** am Ende der ersten und zweiten Längsseiten (221, 222) nahe der zweiten kurzen Seite (224) Einsteckanschlagnasen (227) ausgebildet sind.

6. Wildschutz- oder Weidezaunaufbausystem nach einem der vorangehenden Ansprüche, **dadurch gekennzeichnet, dass** die Rastnase (225) an der zweiten kurzen Seite (224) des Flachverbinders (22) an einer schmal-rechteckigen Verlängerung (226) ausgebildet ist, wobei die Breite der schmal-rechteckigen Verlängerung (226) der lichten Weite zwischen den aufeinanderzugefalzten Öffnungsabschnitten (13) des Profilpfahles (1) entspricht oder um bis zu 10% kleiner ist.

7. Wildschutz- oder Weidezaunaufbausystem nach Anspruch 6, **dadurch gekennzeichnet, dass** die schmal-rechteckige Verlängerung (226) eine Länge hat, die der 1,2 bis 2,5-fachen Tiefe des C-Profils des Profilpfahles (1) entspricht.

8. Wildschutz- oder Weidezaunaufbausystem nach Anspruch 6 oder 7, **dadurch gekennzeichnet, dass** die schmal-rechteckige Verlängerung (226) in der Flächenansicht außermittig, um 5 % bis 20 % entlang der Breite der zweiten kurzen Seite (224) verschoben, am flachen, im Wesentlichen rechteckigen Elementes (220) angeformt ist.

9. Wildschutz- oder Weidezaunaufbausystem nach einem der vorangehenden Ansprüche, **dadurch gekennzeichnet, dass** an der zweiten kurzen Seite (224) oder an der schmal-rechteckigen Verlängerung (226) neben der Rastnase (225) Anlageschrägen (228) ausgebildet sind.

10. Wildschutz- oder Weidezaunaufbausystem nach einem der vorangehenden Ansprüche, **dadurch gekennzeichnet, dass** die Profilpfähle (1, 1') und der Flachverbinder (22) aus beschichtetem Stahlblech, beispielsweise feuerverzinktem Bandstahl oder aus mit Magnesium-haltiger Beschichtung versehenem Blech, gefertigt, insbesondere ausgelasert sind.

11. Wildschutz- oder Weidezaunaufbausystem nach einem der vorangehenden Ansprüche, **dadurch gekennzeichnet, dass** die standardisierten Profilpfählen (1, 1') an deren Seitenschenkel (12) Haken in standardisierten Abständen zum zu verwendenden Knotengeflecht oder Zaundraht aufweisen, so dass diese mit einem Knotengeflecht und/oder Zaundraht behangbar sind.

12. Wildschutz- oder Weidezaunaufbausystem nach Anspruch 11 mit Anspruch 2, **dadurch gekennzeichnet, dass** die Haken im Seitenschenkel (12) des Profilpfahles (1, 1') aus dem verzinkten Bandstahl ausgeformt sind.

13. Wildschutz- oder Weidezaunaufbauverfahren für ein Wildschutz- oder Weidezaunaufbausystem nach einem der vorangehenden Ansprüche, bestehend aus standardisierten zwei miteinander zu verbindenden Profilpfählen (1, 1') als C-Profil, die mit Verbindungsmitteln (2) als Flachverbinder (22) miteinander verbindbar sind, **gekennzeichnet durch** die Schritte:
- Einschieben des Flachverbinders (22) in zwei diagonal gegenüberliegende Aufnahmefalze (14, 14) des zweiten Profilpfahles (1') und
- Eingreifen einer an einer zweiten kurzen Seite (224) vorstehenden Rastnase (225) in ein Aufnahmeloch (15) im ersten Profilpfahl (1).

14. Wildschutz- oder Weidezaunaufbauverfahren nach Anspruch 13, **dadurch gekennzeichnet, dass** die Rastnase (225) des Flachverbinders (22) mit einer schmal-rechteckigen Verlängerung (226), dessen Breite kleiner-gleich der Öffnung des C-Profils ist, in das C-Profil zwischen deren Seitenschenkel (12, 12) des ersten Profilpfahles (1) eingeführt und in ein Aufnahmeloch (15) eingegriffen wird.

15. Wildschutz- oder Weidezaunaufbauverfahren nach Anspruch 13 oder 14, **dadurch gekennzeichnet, dass** die Rastnase (225) des Flachverbinders (22) in ein an wenigstens einem Seitenschenkel (12) des ersten Profilpfahles (1) vorgesehenes Aufnahmelangloch (17) eingesteckt und um ungefähr 45° um die Längsachse des zweiten Profilpfahles (1') verdreht und damit verrastet wird.

## Claims

1. Game protection or pasture fence construction system consisting of standardized profile posts (1, 1') which can be connected to one another by means of connecting means (2), wherein
- the standardized profile posts (1, 1') have a C-profile, which has receiving holes (15) at regular intervals in a continuous back leg (11), and in the transition between side legs (12), protruding on both sides from the back leg (11), and respective opening sections (13) folded toward one another, one receiving fold (14) each,
**characterized in that**
- the connecting means (2) is formed by a flat connector (22) in the form of a flat, substantially rectangular element (220), wherein the longitudinal sides (221, 221) taper slightly conically toward a first short side (223) of the rectangular element and can thereby be inserted into and fixed in two diagonally opposite receiving folds (14, 14) of a further profile post (1'), and wherein on a second short side (224), opposite the first short side (223), a protruding locking lug (225) is arranged, which is formed such that it can engage into the receiving hole (15) of the back leg (11) of the first profile post (1).

2. Game protection or pasture fence construction system according to claim 1, **characterized in that** the locking lug (225) on the second short side (224) of the flat connector (22), in its plan view, has a three-quarter circular shape, wherein the diameter of this three-quarter circular shape corresponds to the inner diameter of the receiving hole (15) of the back leg (11) of the first profile post (1) or is up to 10% smaller.

3. Game protection or pasture fence construction system according to claim 2, **characterized in that** receiving elongated holes (17) are introduced into at least one side leg (12) of the profile post (1), the elongated-hole width of which is up to 20% smaller than the diameter of the three-quarter circular shape of the locking lug (225).

4. Game protection or pasture fence construction system according to one of the preceding claims, **characterized in that** in the flat connector (22), the first longitudinal side (221) and the second longitudinal side (222) taper slightly conically toward the first short side (223) of the rectangular element at an angle of 0.5° to 5°.

5. Game protection or pasture fence construction system according to one of the preceding claims, **characterized in that** insertion stop lugs (227) are formed at the ends of the first and second longitudinal sides (221, 222) near the second short side (224).

6. Game protection or pasture fence construction system according to one of the preceding claims, **characterized in that** the locking lug (225) on the second short side (224) of the flat connector (22) is formed on a narrow rectangular extension (226), wherein the width of the narrow rectangular extension (226) corresponds to the clear width between the opening sections (13) of the profile post (1) folded toward one another or is up to 10% smaller.

7. Game protection or pasture fence construction system according to claim 6, **characterized in that** the narrow rectangular extension (226) has a length corresponding to 1.2 to 2.5 times the depth of the C-profile of the profile post (1).

8. Game protection or pasture fence construction system according to claim 6 or 7, **characterized in that** the narrow rectangular extension (226), in plan view, is integrally formed on the flat, substantially rectangular element (220) in an off-center manner, shifted by 5% to 20% along the width of the second short side (224).

9. Game protection or pasture fence construction system according to one of the preceding claims, **characterized in that** contact bevels (228) are formed on the second short side (224) or on the narrow rectangular extension (226) beside the locking lug (225).

10. Game protection or pasture fence construction system according to one of the preceding claims, **characterized in that** the profile posts (1, 1') and the flat connector (22) are manufactured, in particular laser-cut, from coated sheet steel, for example hot-dip galvanized strip steel or sheet provided with a magnesium-containing coating.

11. Game protection or pasture fence construction system according to one of the preceding claims, **characterized in that** the standardized profile posts (1, 1') have hooks on their side legs (12) at standardized spacings for the knotted mesh or fence wire to be used, so that they can be hung with knotted mesh and/or fence wire.

12. Game protection or pasture fence construction system according to claim 11 in combination with claim 2, **characterized in that** the hooks in the side leg (12) of the profile post (1, 1') are formed out of the galvanized strip steel.

13. Game protection or pasture fence construction method for a game protection or pasture fence construction system according to one of the preceding claims, consisting of standardized two profile posts (1, 1') to be connected to one another as a C-profile, which can be connected to one another by means of connecting means (2) as flat connectors (22), **characterized by** the steps of:
- inserting the flat connector (22) into two diagonally opposite receiving folds (14, 14) of the second profile post (1'), and
- engaging a locking lug (225), protruding on a second short side (224), into a receiving hole (15) in the first profile post (1).

14. Game protection or pasture fence construction method according to claim 13, **characterized in that** the locking lug (225) of the flat connector (22), with a narrow rectangular extension (226), the width of which is less than or equal to the opening of the C-profile, is introduced into the C-profile between the side legs (12, 12) thereof of the first profile post (1) and engaged into a receiving hole (15).

15. Game protection or pasture fence construction method according to claim 13 or 14, **characterized in that** the locking lug (225) of the flat connector (22) is inserted into a receiving elongated hole (17) provided in at least one side leg (12) of the first profile post (1) and is rotated by approximately 45° about the longitudinal axis of the second profile post (1') and thereby locked in place.

## Revendications

1. Système de construction de clôture de protection contre le gibier ou de clôture de pâturage, composé de poteaux profilés standardisés (1, 1') qui peuvent être reliés les uns aux autres au moyen d'éléments de liaison (2), dans lequel
- les poteaux profilés standardisés (1, 1') présentent un profilé en C, lequel comporte, dans une aile dorsale continue (11), des trous de réception (15) à intervalles réguliers ainsi que, dans la transition entre des ailes latérales (12) saillant de part et d'autre de l'aile dorsale (11) et des sections d'ouverture respectives (13) repliées l'une vers l'autre, un pli de réception (14) chacun,
**caractérisé en ce que**
- l'élément de liaison (2) est constitué d'un connecteur plat (22) sous la forme d'un élément plat, sensiblement rectangulaire (220), les côtés longitudinaux (221, 221) convergeant légèrement de manière conique vers un premier petit côté (223) de l'élément rectangulaire et pouvant ainsi être introduits dans et fixés dans deux plis de réception (14, 14) diagonalement opposés d'un autre poteau profilé (1'), et **en ce que**, sur un second petit côté (224), opposé au premier petit côté (223), est disposé un ergot d'encliquetage saillant (225), conformé pour pouvoir s'engager dans le trou de réception (15) de l'aile dorsale (11) du premier poteau profilé (1).

2. Système de construction de clôture de protection contre le gibier ou de clôture de pâturage selon la revendication 1, **caractérisé en ce que** l'ergot d'encliquetage (225), sur le second petit côté (224) du connecteur plat (22), présente, en vue de dessus, une forme de trois quarts de cercle, le diamètre de cette forme en trois quarts de cercle correspondant au diamètre intérieur du trou de réception (15) de l'aile dorsale (11) du premier poteau profilé (1) ou étant inférieur de jusqu'à 10 %.

3. Système de construction de clôture de protection contre le gibier ou de clôture de pâturage selon la revendication 2, **caractérisé en ce que** des trous oblongs de réception (17) sont ménagés dans au moins une aile latérale (12) du poteau profilé (1), dont la largeur du trou oblong est inférieure de jusqu'à 20 % au diamètre de la forme en trois quarts de cercle de l'ergot d'encliquetage (225).

4. Système de construction de clôture de protection contre le gibier ou de clôture de pâturage selon l'une des revendications précédentes, **caractérisé en ce que**, dans le connecteur plat (22), le premier côté longitudinal (221) et le second côté longitudinal (222) convergent légèrement de manière conique vers le premier petit côté (223) de l'élément rectangulaire selon un angle de 0,5° à 5°.

5. Système de construction de clôture de protection contre le gibier ou de clôture de pâturage selon l'une des revendications précédentes, **caractérisé en ce que** des ergots de butée d'insertion (227) sont formés à l'extrémité des premier et second côtés longitudinaux (221, 222) à proximité du second petit côté (224).

6. Système de construction de clôture de protection contre le gibier ou de clôture de pâturage selon l'une des revendications précédentes, **caractérisé en ce que** l'ergot d'encliquetage (225), sur le second petit côté (224) du connecteur plat (22), est formé sur une extension étroite rectangulaire (226), la largeur de l'extension étroite rectangulaire (226) correspondant à la largeur libre entre les sections d'ouverture (13) repliées l'une vers l'autre du poteau profilé (1) ou étant inférieure de jusqu'à 10 %.

7. Système de construction de clôture de protection contre le gibier ou de clôture de pâturage selon la revendication 6, **caractérisé en ce que** l'extension étroite rectangulaire (226) a une longueur correspondant à 1,2 à 2,5 fois la profondeur du profilé en C du poteau profilé (1).

8. Système de construction de clôture de protection contre le gibier ou de clôture de pâturage selon la revendication 6 ou 7, **caractérisé en ce que** l'extension étroite rectangulaire (226), en vue de dessus, est formée d'une seule pièce sur l'élément plat, sensiblement rectangulaire (220), de manière excentrée, décalée de 5 % à 20 % le long de la largeur du second petit côté (224).

9. Système de construction de clôture de protection contre le gibier ou de clôture de pâturage selon l'une des revendications précédentes, **caractérisé en ce que** des surfaces biseautées d'appui (228) sont formées sur le second petit côté (224) ou sur l'extension étroite rectangulaire (226), à côté de l'ergot d'encliquetage (225).

10. Système de construction de clôture de protection contre le gibier ou de clôture de pâturage selon l'une des revendications précédentes, **caractérisé en ce que** les poteaux profilés (1, 1') et le connecteur plat (22) sont fabriqués, en particulier découpés au laser, en tôle d'acier revêtue, par exemple en acier en bande galvanisé à chaud ou en tôle pourvue d'un revêtement contenant du magnésium.

11. Système de construction de clôture de protection contre le gibier ou de clôture de pâturage selon l'une des revendications précédentes, **caractérisé en ce que** les poteaux profilés standardisés (1, 1') présentent, sur leurs ailes latérales (12), des crochets à des espacements standardisés pour le treillis noué ou le fil de clôture à utiliser, de sorte qu'ils peuvent être garnis d'un treillis noué et/ou d'un fil de clôture.

12. Système de construction de clôture de protection contre le gibier ou de clôture de pâturage selon la revendication 11 en combinaison avec la revendication 2, **caractérisé en ce que** les crochets dans l'aile latérale (12) du poteau profilé (1, 1') sont formés à partir de l'acier en bande galvanisé.

13. Procédé de construction d'une clôture de protection contre le gibier ou d'une clôture de pâturage pour un système de construction de clôture de protection contre le gibier ou de clôture de pâturage selon l'une des revendications précédentes, composé de deux poteaux profilés standardisés (1, 1') à relier l'un à l'autre en tant que profilé en C, pouvant être reliés l'un à l'autre au moyen d'éléments de liaison (2) sous forme de connecteurs plats (22), **caractérisé par** les étapes consistant à :
- introduire le connecteur plat (22) dans deux plis de réception (14, 14) diagonalement opposés du second poteau profilé (1'), et
- faire engager un ergot d'encliquetage (225), saillant sur un second petit côté (224), dans un trou de réception (15) du premier poteau profilé (1).

14. Procédé de construction d'une clôture de protection contre le gibier ou d'une clôture de pâturage selon la revendication 13, **caractérisé en ce que** l'ergot d'encliquetage (225) du connecteur plat (22), avec une extension étroite rectangulaire (226), dont la largeur est inférieure ou égale à l'ouverture du profilé en C, est introduit dans le profilé en C entre les ailes latérales (12, 12) de celui-ci du premier poteau profilé (1) et engagé dans un trou de réception (15).

15. Procédé de construction d'une clôture de protection contre le gibier ou d'une clôture de pâturage selon la revendication 13 ou 14, **caractérisé en ce que** l'ergot d'encliquetage (225) du connecteur plat (22) est inséré dans un trou oblong de réception (17) prévu dans au moins une aile latérale (12) du premier poteau profilé (1), puis tourné d'environ 45° autour de l'axe longitudinal du second poteau profilé (1') et ainsi encliqueté.
